# EUROPÄISCHE PATENTSCHRIFT

(11) **EP 1 830 690 B1**
(45) Veröffentlichungstag und Bekanntmachung des Hinweises auf die Patenterteilung: **04.03.2015**
(21) Anmeldenummer: 05803092.5
(22) Anmeldetag: 24.10.2005
(51) Int. Cl.: A47L 15/48, A47L 15/42, D06F 58/24

(54) **GESCHIRRSPÜLMASCHINE MIT EINER SORPTIONSTROCKENVORRICHTUNG UND VERFAHREN ZUM BETREIBEN DERSELBEN**
DISHWASHER WITH A SORPTION DRIER AND METHOD FOR THE OPERATION THEREOF
LAVE-VAISSELLE COMPORTANT UN DISPOSITIF DE SECHAGE PAR SORPTION ET PROCEDE POUR FAIRE FONCTIONNER LEDIT LAVE-VAISSELLE

(30) Priorität: 09.12.2004 DE 102004059422; 28.01.2005 DE 102005004089
(43) Veröffentlichungstag der Anmeldung: 12.09.2007
(73) Patentinhaber: BSH Bosch und Siemens Hausgeräte GmbH, 81739 München (DE)
(72) Erfinder: JERG, Helmut, 89537 Giengen (DE); PAINTNER, Kai, 86477 Adelsried (DE)
(86) Internationale Anmeldenummer: PCT/EP2005/055480
(87) Internationale Veröffentlichungsnummer: WO 2006/061292

(56) Entgegenhaltungen:
- EP-A- 0 358 279
- EP-A- 0 777 998
- DE-A1- 2 016 831
- DE-A1- 3 626 887
- DE-A1- 10 353 774
- DE-A1- 10 353 775

## Beschreibung

Die Erfindung betrifft eine Geschirrspülmaschine mit einer Sorptionstrockenvorrichtung. Die Erfindung betrifft weiterhin ein Verfahren zum Betreiben einer Geschirrspülmaschine mit wenigstens einem Teilprogrammabschnitt mit zu erwärmender Spülflotte auf eine Nenntemperatur, z. B. "Reinigen", wobei in diesem Teilprogrammabschnitt von einer Heizung erwärmte Luft zur Desorption eines reversibel dehydrierbaren Materials aus einem Spülbehälter der Geschirrspülmaschine und/oder Umgebungsluft durch eine Sorptionskolonne mit reversibel dehydrierbarem Material in den Spülbehälter zur Erwärmung der Spülflotte und/oder des Spülgutes geleitet wird.

Herkömmliche Geschirrspülmaschinen weisen bekanntlich ein Spülverfahren auf, dessen Programmablauf im allgemeinen aus wenigstens einem Teilprogrammschritt "Vorspülen", einem Teilprogrammschritt "Reinigen", wenigstens einem Teilprogrammschritt "Zwischenspülen", einem Teilprogrammschritt "Klarspülen" und einem Teilprogrammschritt "Trocknen" besteht. Zur Erhöhung des Reinigungseffekts wird dabei die Spülflotte vor oder während eines Teilprogrammschrittes erwärmt. Die Erwärmung der Spülflotte erfolgt üblicherweise mittels elektrischer Heizungen. Zur Trocknung des Spülguts in einer Geschirrspülmaschine sind unterschiedliche Trocknungssysteme bekannt.

So ist aus der DE 20 16 831 eine Geschirrspülmaschine der eingangs genannten Art bekannt, bei der die Luft aus dem Spülbehälter über eine verschließbare Öffnung in der Wand des Spülbehälters auf reversibel dehydrierbares Material geleitet wird und von dort über eine Öffnung nach außen. Die Desorption des reversibel dehydrierbaren Materials findet während der Stillstandsphase der Geschirrspülmaschine statt, wobei der dabei entstehende Wasserdampf über die Öffnung nach außen geleitet wird. Die beschriebene Geschirrspülmaschine ist aus energetischer Sicht nachteilig, da die Regeneration des reversibel dehydrierbaren Materials während einer Stillstandsphase der Geschirrspülmaschine stattfindet, somit zu einer Zeit, zu der keiner der eingangs beschriebenen Teilprogrammschritte durchgeführt wird. Ein weiterer Nachteil besteht darin, dass durch das Ausleiten des während der Regeneration des reversibel dehydrierbaren Materials entstehenden Wasserdampfes nach außen eine Schädigung der umgebenden Küchenmöbel nicht ausgeschlossen werden kann. Die Regenerierung ist dabei mit einem zusätzlichen Energiebedarf verbunden, der zusätzlich zu dem während der Teilprogrammschritte benötigten Energiebedarf anfällt.

Um den Energieaufwand beim Betreiben einer Geschirrspülmaschine so gering wie möglich zu halten, ist aus der DE 103 53 774.0 der Anmelderin eine Geschirrspülmaschine mit einem Spülbehälter und Vorrichtungen zum Spülen von Geschirr mittels Spülflotte bekannt, welche eine mit dem Spülbehälter luftleitend verbundene, reversibel dehydrierbares Material enthaltende Sorptionskolonne aufweist, wobei die Sorptionskolonne einerseits zur Trocknung des Geschirrs und andererseits die zur Desorption der Sorptionskolonne eingesetzte Wärmeenergie zur Erwärmung der im Spülbehälter befindlichen Spülflotte und/oder des Geschirrs wenigstens teilweise verwendet wird.

Zur Lösung des gleichen Problems schlägt die DE 103 53 775.9 der Anmelderin vor, zum Betreiben einer Geschirrspülmaschine in dem wenigstens einem Teilprogrammschnitt "Trocknen" Luft aus einem Spülbehälter und/oder aus Umgebungsluft durch eine Sorptionskolonne und in den Spülbehälter zu leiten, wobei die Sorptionskolonne reversibel dehydrierbares Material enthält und der Luft während des Durchleitens Feuchtigkeit entzieht.

Durch den Einsatz von reversibel dehydrierbarem Material mit hygroskopischer Eigenschaft, z.B. Zeolith, ist eine Erwärmung des zu behandelnden Gutes in dem dem Teilprogrammschritt "Trocknen" vorhergehenden Teilprogrammschritts normalerweise nicht mehr notwendig. Hierdurch wird eine beträchtliche Energieeinsparung möglich.

Aus der EP 0 358 279 B1 ist eine Einrichtung zum Trocknen von Geschirr in einer Haushalts-Geschirrspülmaschine bekannt, in der die Spülflotte durch einen außerhalb des Spülbehälters angeordneten Erhitzer, vorzugsweise einen elektrischen Durchlauferhitzer aufgeheizt wird, wobei ein weitgehend geschlossenes Trocknungssystem vorgesehen ist, bei dem Luft aus dem Spülbehälter über eine durch Aufheizung regenerierbare Trocknungsvorrichtung und von dieser zurück in den Spülbehälter zirkuliert. Dabei besteht die Trocknungsvorrichtung aus einem mit dem Erhitzer in Wärmekontakt stehenden Trockenbehälter, welcher mit einem die Feuchtigkeit adsorbierenden Trockenmittel gefüllt ist. Durch die Verbindung des Trockenbehälters mit dem für die Aufheizung der Spülflotte ohnehin vorhandenen Erhitzer ergibt sich nach Ablauf des Spülvorganges eine sofortige Betriebsbereitschaft der Trockenvorrichtung. Das Trockenmittel wird hierbei zumindest teilweise als Mantel um die Heizelemente des Erhitzers gelegt, so dass das Trockenmittel im Trockenbehälter während jedes Aufheizvorganges aufgeheizt und damit getrocknet werden kann.

Der Trockenbehälter ist als doppelwandiger Hohlzylinder ausgeformt, in welchen das Trockenmaterial eingelagert ist. Die Anordnung der Einlass- und Auslassöffnung zum Anschluss an das geschlossene Luftsystem erfolgt in diagonal gegenüberliegender Anordnung. Hieraus ergibt sich der Nachteil eines verhältnismäßig hohen Strömungswiderstands, so dass das zur Förderung des Luftstroms vorgesehene Gebläse mit sehr hoher Leistung betrieben werden muss. Dies macht sich negativ hinsichtlich der Geräuschentwicklung und hinsichtlich des Energieverbrauchs bemerkbar.

Aufgrund der konstruktiven Ausgestaltung der Sorptionstrockenvorrichtung, welche eine inhomogene Wärmeeinleitung in das Trockenmaterial bedingt, ist die Desorption zeitaufwendig und kann darüber hinaus zu lokalen Überhitzungen des Trockenmittels und damit zu dessen irreversibler Schädigung führen. Die Desorption ist auch deshalb schwierig, da der Erhitzer im Zentrum des doppelwandigen Hohlzylinders angeordnet ist und eine radiale Ausbreitung der Hitze zu dem nahe der äußeren Hohlzylinderwand gelegenen Trocknungsmittel aufgrund des axial vorbeiströmenden Luftstroms kaum möglich ist.

Aufgabe der vorliegenden Erfindung ist es daher, ein Verfahren zum Betreiben einer Geschirrspülmaschine und eine Geschirrspülmaschine, insbesondere eine Haushalts-Geschirrspülmaschine, bereitzustellen, mit welchen eine Verkürzung der Dauer eines Spülprogramms mit mehreren Teilprogrammschritten möglich ist.

Diese Aufgabe wird durch das erfindungsgemäße Verfahren mit den Merkmalen gemäß Anspruch 1 sowie durch eine Geschirrspülmaschine mit den Merkmalen des Patentanspruches 6 gelöst. Vorteilhafte Weiterbildungen der vorliegenden Erfindung sind jeweils in den abhängigen Ansprüchen wiedergegeben.

Bei dem erfindungsgemäßen Verfahren zum Betreiben einer Geschirrspülmaschine, insbesondere einer Haushalts-Geschirrspülmaschine, mit wenigstens einem Teilprogrammschritt mit zu erwärmender Spülflotte auf eine Nenntemperatur, z.B. "Reinigen", wobei in diesem Teilprogrammabschnitt von einer Heizung erwärmte Luft zur Desorption eines reversibel dehydrierbaren Materials aus einem Spülbehälter der Geschirrspülmaschine und/oder Umgebungsluft durch eine Sorptionskolonne mit reversibel dehydrierbarem Material in den Spülbehälter zur Erwärmung der Spülflotte und/oder des Spülgutes geleitet wird, wird die Heizung nach dem Erreichen eines desorbierten Zustands des reversibel dehydrierbaren Materials weiter betrieben, bis die in dem jeweiligen Teilprogrammabschnitt erforderliche Nenntemperatur der Spülflotte erreicht ist.

Unter dem Begriff eines desorbierten Zustands des reversibel dehydrierbaren Materials wird in der vorliegenden Erfindung verstanden, dass das reversibel dehydrierbare Material vollständig oder nahezu vollständig entfeuchtet ist.

Mit anderen Worten ausgedrückt bedeutet dies, dass die Erwärmung der Spülflotte nicht durch eine konventionell ausgebildete (Wasser-)Heizung erfolgt, sondern dass die für die Desorption aufgewendete Energie während eines Teilprogrammschritts mit zu erwärmender Spülflotte zur Erwärmung der Spülflotte herangezogen wird. Üblicherweise ist die Desorption jedoch bereits zu einem Zeitpunkt vollständig abgeschlossen, zu dem die Spülflotte noch nicht auf die erforderliche Nenntemperatur gebracht ist. Die Erfindung schlägt deshalb vor, die zur Desorption eingesetzte (Luft-)Heizung weiter zu betreiben, so dass in der Sorptionstrockenvorrichtung Luft erwärmt und dem Spülbehälter zugeführt wird. Durch das Einleiten von heißer Luft in den Spülbehälter werden die Spülflotte und/oder das zu behandelnde Spülgut solange weiter erwärmt, bis die Nenntemperatur der Spülflotte erreicht ist. Da während des Desorptionsvorganges in der Sorptionstrockenvorrichtung, genauer in der Sorptionskolonne sehr hohe Temperaturen erreicht werden, ergibt sich eine sehr schnelle Aufheizung der Spülflotte.

Gemäß einer zweckmäßigen Ausgestaltung wird die desorbierte Feuchtigkeit dem Spülbehälter zugeführt. Während des Desorptionsvorganges, der während eines Teilprogrammschritts mit zu erwärmender Spülflotte stattfindet, wird das reversibel dehydrierbare Material zur Desorption auf sehr hohe Temperaturen erhitzt. Dabei tritt die gespeicherte Flüssigkeit als heißer Wasserdampf aus.

befindlichen Gebläses wird der Wasserdampf in einen Spülbehälter der Geschirrspülmaschine geleitet, wodurch auch die Luft im Spülbehälter erwärmt wird. Die Einleitung des heißen Wasserdampfs und der erwärmten Luft in den Spülbehälter (Spülbehälter) reicht aus, um die Spülflotte und/oder das Geschirr auf eine Temperatur zu erwärmen, so dass die Differenz bis zur Nenntemperatur durch Weiterbetreiben der Sorptionstrockenvorrichtung bewirkbar ist.

In einer weiteren zweckmäßigen Ausgestaltung kann auch vorgesehen sein, vor und/oder nach dem Erreichen des desorbierten Zustands des reversibel dehydrierbaren Materials eine zusätzliche Heizung zum Erwärmen der Spülflotte zu betreiben. Hierdurch ergibt sich eine Verkürzung der Aufheizzeit und damit eine Reduktion der Zeitdauer des Teilprogrammschritts der zu erwärmenden Spülflotte.

Zweckmäßigerweise ist die zusätzliche Heizung im Kreislauf der Spülflotte angeordnet und erwärmt die Spülflotte direkt. Mit anderen Worten ausgedrückt bedeutet dies, dass die zusätzliche Heizung als Wasserheizung ausgebildet ist, welche jedoch im Vergleich zu einer klassischen Heizung, wie sie beispielsweise in der EP 0 358 279 B1 beschrieben ist, sehr viel kleiner dimensioniert werden kann. Die zusätzliche Heizung kann alternativ auch als Luftheizung in dem Kreislauf der Sorptionstrockenvorrichtung ausgebildet sein.

In einer weiteren vorteilhaften Ausgestaltung erfolgt die Durchleitung der Luft durch ein mit einer variablen Drehzahl betreibbares Gebläse, wobei die Drehzahl des Gebläses entsprechend einer gewünschten Zeitdauer des Teilprogrammschritts festgelegt ist. Gemäß dieser vorteilhaften Ausgestaltung kann eine Geschirrspülmaschine während des Teilprogrammschritts mit zu erwärmender Spülflotte mit einer konstanten, geringen und damit geräuschoptimierten Drehzahl betrieben werden. Andererseits ist es möglich, die Drehzahl eines gesteuerten Gebläses derart zu erhöhen, dass der Erwärmungsvorgang der Spülflotte beschleunigt wird. Ein solchermaßen zeitreduziertes Spülprogramm geht in diesem Falle mit einem erhöhten Betriebsgeräusch einher. Es ist deshalb vorteilhaft, wenn die Drehzahl des Gebläses in mehreren Stufen durch ein Bedienelement der Geschirrspülmaschine anwählbar ist. Mit anderen Worten kann in dem Bedienelement der Geschirrspülmaschine eine Funktion vorgesehen sein, welche es einem Benutzer erlaubt, aktiv ein "Schnell-Spülprogramm" auszuwählen, wobei sich der Nutzer dann aktiv für eine erhöhte Geräuschentwicklung entscheidet.

Eine erfindungsgemäße Geschirrspülmaschine weist die gleichen Vorteile auf, wie sie in Verbindung mit dem oben stehenden Verfahren erläutert wurden.

Bei einer erfindungsgemäß ausgebildeten Geschirrspülmaschine, insbesondere Haushalts-Geschirrspülmaschine, mit einem Spülbehälter und Vorrichtungen zum Spülen von Spülgut mittels Spülflotte sowie mit einer Sorptionstrockenvorrichtung, wobei diese eine mit dem Spülbehälter luftleitend verbundene, reversibel dehydrierbares Material enthaltende Sorptionskolonne aufweist, wobei die Sorptionskolonne einerseits zur Trocknung des Geschirrs und andererseits die zur Desorption der Sorptionskolonne eingesetzte Wärmeenergie zur Erwärmung der im Spülbehälter befindlichen Spülflotte und/oder des Spülguts verwendet wird, ist die Erwärmung der Spüflotte auf die in einem jeweiligen Teilprogrammabschnitt erforderliche Nenntemperatur mittels der Sorptionstrockenvorrichtung ausführbar.

Ein Vorteil besteht darin, dass sich für eine derartige Geschirrspülmaschine ein sehr einfacher konstruktiver Aufbau ergibt, da ein Verzicht auf eine klassische (Wasser-)Heizung möglich ist. Die Geschirrspülmaschine kann vom Prinzip her, wie in der DE 103 53 774 und/oder der DE 103 53 775 der Anmelderin beschrieben, ausgebildet sein, deren Inhalte in diese Anmeldung, soweit sinnvoll, aufgenommen wird. Die hier beschriebene Maschine unterscheidet sich durch deren Steuerung und den Betrieb der Sorptionstrockenvorrichtung und/oder durch die Gestaltung der Komponenten der Sorptionstrockenvorrichtung, da diese über die reine Dehydrierung der Sorptionskolonne weiter betrieben wird, bis die Nenntemperatur der Spülflüssigkeit erreicht ist. Bei einer erfindungsgemäßen Geschirrspülmaschine sind demnach die Hauptsteuerung zur Erzielung des gewünschten Betriebs abgeändert und/oder die Leistung der Heizung und des Gebläses sowie das Volumen der Sorptionskolonne, z.B. hinsichtlich deren geometrischen Gestaltung, derart aufeinander abgestimmt, dass durch alleiniges Betreiben der Heizung und des Gebläses eine weitere Erhöhung der Temperatur der Spülflotte möglich ist.

Nach einem bevorzugten Merkmal wird Luft aus dem Spülbehälter und/oder aus der Umgebungsluft während eines Teilprogrammschritts mit zu erwärmender Spülflotte, bevorzugt während des Teilprogrammschritts "Reinigen" und/oder "Vorspülen" und/oder "Klarspülen" durch die Sorptionskolonne und in den Spülbehälter geleitet.

Nach einem weiteren bevorzugten Merkmal weist der Spülbehälter einen Auslass mit einer Leitung zur Sorptionskolonne auf, wobei die Leitung vorzugsweise über ein Absperrventil und in Strömungsrichtung anschließend vorzugsweise über ein Einlassventil zur Umgebungsluft verfügt und der Spülbehälter einen Einlass mit einer Leitung von der Sorptionskolonne aufweist, wobei in der Leitung zu der Sorptionskolonne ein Gebläse angeordnet ist, das wenigstens einen Teil der Luft im Spülbehälter oder aus der Umgebungsluft der Sorptionskolonne wenigstens zeitweise einführt. Bei einem vorzugsweise geschlossenen Luftsystem ist ein Austausch von verschmutzter Luft aus der Umgebung vollständig ausgeschlossen, womit eine Rückanschmutzung des behandelten Spülgutes verhindert wird. Das Gebläse läst sich leicht ansteuern, so dass der Einsatz der Sorptionskolonne genau gesteuert werden kann.

Zweckmäßigerweise ist zur Desorption des reversibel dehydrierbaren Materials und der Erwärmung der Spülflotte und/oder des Spülguts eine elektrische Heizung angeordnet. Diese ist bevorzugt in dem reversibel dehydrierbaren Material oder in der Leitung zur Sorptionskolonne angeordnet.

Es ist ferner zweckmäßig, wenn das Gebläse der Sorptionstrockenvorrichtung durch eine Hauptsteuereinheit der Geschirrspülmaschine drehzahlsteuerbar ausgebildet ist, um die Geschwindigkeit der Erwärmung der Temperatur der Spülflotte und/oder des Spülgutes steuern zu können. Die Drehzahl des Gebläses ist dabei vorzugsweise stufenlos oder in mehreren Stufen durch ein Bedienelement der Geschirrspülmaschine anwählbar.

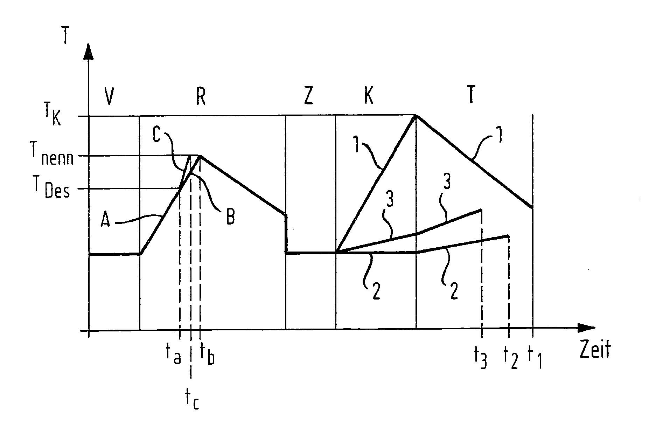

Die Erfindung wird nachstehend anhand des in der Zeichnung dargestellten Ausführungsbeispiels eines Verfahrens bei einer Geschirrspülmaschine näher erläutert.

Das erfindungsgemäße Verfahren zum Betreiben einer Geschirrspülmaschine mit wenigstens einem Teilprogrammschritt mit zu erwärmender Spülflotte auf eine Nenntemperatur und/oder mit wenigstens einem Teilprogrammschritt "Trocknen" wird bei dem erläuterten Ausführungsbeispiel in einer Geschirrspülmaschine ausgeführt, welche schematisch, wie in der DE 103 53 774 und/oder der DE 103 53 775 der Anmelderin beschrieben, aufgebaut ist. Eine Geschirrspülmaschine weist bekanntlich Spülverfahren auf, dessen Programmablauf im allgemeinen aus wenigstens einem Teilprogrammschritt "Vorspülen" V, einem Teilprogrammschritt "Reinigen" R, wenigstens einem Teilprogrammschritt "Zwischenspülen" Z, einem Teilprogrammschritt "Klarspülen" K und einem Teilprogrammschritt "Trocknen" T besteht. Vorzugsweise wird das Trocknen im Ausführungsbeispiel, wie in der DE 103 53 774 und/oder der DE 103 53 775 beschrieben, ausgeführt, deren Inhalte in diese Anmeldung, sofern sinnvoll, aufgenommen werden. In der Figur ist hierbei der typische Temperaturverlauf der Spülflotte während dieser Teilprogrammschritte dargestellt, wobei die Figur sowohl das Betreiben in einer konventionellen Geschirrspülmaschine als auch ein Betreiben nach dem erfindungsgemäßen Verfahren darstellt.

Die Teilprogrammschritte "Vorspülen" V und "Zwischenspülen" Z sind für die erfindungsgemäßen Verfahren von untergeordneter Bedeutung, so dass diese in der nachfolgenden Beschreibung nicht näher betrachtet werden. Mit Beginn des Teilprogrammschritts "Reinigen" R wird die Spülflotte üblicherweise auf eine Nenntemperatur Tₙₑₙₙ erwärmt, um die gewünschte Reinigungswirkung zu erzielen. In einer energieoptimierten Geschirrspülmaschine mit einer Sorptionstrockenvorrichtung, wie diese im Stand der Technik bereits bekannt ist, findet die Desorption, d.h. das Aufheizen des reversibel dehydrierbaren Materials ebenfalls während des Teilprogrammschritts "Reinigen" R statt. Die Inhalte der DE 103 53 774 und/oder DE 103 53 775 werden, soweit sinnvoll, in diese Anmeldung aufgenommen.

Zur Erwärmung der Spülflotte wird nunmehr erfindungsgemäß diese nicht direkt durch eine Wasserheizung erwärmt, sondern es wird die zur Desorption notwendige Energie herangezogen. Hierzu wird eine in der Sorptionstrockenvorrichtung angeordnete (Luft-)Heizung betrieben, die das reversibel dehydrierbare Material, z.B. Zeolith, auf eine hohe Temperatur erwärmt. Während der Desorption des reversibel dehydrierbaren Materials wird Luft aus einem Spülbehälter, z.B. mit einem Auslass, durch eine Sorptionskolonne und dann zurück in den Spülbehälter über einen Einlass geleitet, wobei die Luft während des Durchleitens durch die Heizung erwärmt wird. Hierbei wird mittels eines Gebläses die Luft aus dem Spülbehälter angesaugt und durch die Sorptionskolonne gedrückt. Der aus der Sorptionskolonne austretende heiße Wasserdampf und die nun erwärmte Luft treten in den Spülbehälter durch den oben schon erwähnten Einlass ein und treffen dort auf die umgewälzte Spülflotte und/oder das Geschirr, die dabei erwärmt werden.

Üblicherweise wird die Sorptionstrockenvorrichtung lediglich bis zu demjenigen Punkt betrieben, bis das reversibel dehydrierbare Material vollständig desorbiert, d.h. entfeuchtet ist (Abschnitt A in der Figur). In dem in der Figur dargestellten Ausführungsbeispiel ist dieser Zustand zu einem Zeitpunkt tₐ erreicht, zu dem die Spülflotte und/oder das zu behandelnde Gut eine Temperatur T_{Des} erreicht hat. Diese Temperatur liegt üblicherweise unterhalb der zu erzielenden Nenntemperatur Tₙₑₙₙ. Um diese Temperaturdifferenz zu überbrücken werden nunmehr erfindungsgemäß die Heizung und das Gebläse der Sorptionstrockenvorrichtung solange weiter betrieben und heiße Luft in den Spülbehälter gefördert, bis die umgewälzte Spülflotte und/oder das zu behandelnde Gut die gewünschte Nenntemperatur erreicht (Abschnitt B). Dieser Zustand wird bei entsprechender Dimensionierung der Sorptionstrockenvorrichtung, insbesondere der Leistung der Heizung, der Drehzahl des Gebläses und der Anordnung sowie der Geometrie der Sorptionskolonne zu einem Zeitpunkt t_{b} erreicht.

Das erfindungsgemäße Verfahren ermöglicht das Bereitstellen einer Geschirrspülmaschine, welche somit vollständig auf eine Wasserheizung verzichten kann. Die Erwärmung der Spülflotte in sämtlichen Teilprogrammschritten wird vorteilhafterweise durch die konstruktiv sehr einfache und damit kostengünstig herzustellende Luftheizung der Sorptionstrockenvorrichtung vorgenommen.

Um den Teilprogrammschritt "Reinigen" R schneller durchführen zu können, d.h. um die gewünschte Nenntemperatur Tₙₑₙₙ schneller erreichen zu können, kann gemäß einer anderen Variante der Erfindung eine zusätzliche Heizung vorgesehen sein, welche die Spülflotte während des Abschnitts A und/oder während des Abschnitts zur Erhöhung der Temperatur von T_{Des} auf Tₙₑₙₙ betrieben wird, so dass die Nenntemperatur Tₙₑₙₙ bereits zu einem Zeitpunkt t_{c} erreicht ist (Abschnitt C). Die zusätzliche Heizung kann wahlweise als Wasserheizung, z.B. als Durchlauferhitzer, oder auch als in den Luftkreislauf eingefügte Luftheizung ausgebildet sein. In beiden Fällen kann die zusätzliche Heizung derart dimensioniert werden, dass lediglich eine geringere Heizleistung zur Verfügung gestellt werden braucht, welche in der Lage ist, die fehlende Temperaturdifferenz zwischen T_{Des} und Tₙₑₙₙ zu überbrücken. Aus der Figur nicht ersichtlich, für einen Fachmann jedoch ohne weiteres erkenntlich, ist die Tatsache, dass unabhängig von dem Zeitpunkt des Erreichens der Nenntemperatur Tₙₑₙₙ (im Ausführungsbeispiel t_{b} oder t_{c}) die Aufheizphase der Spülflotte beendet wird und darauf ein Abfall der Behandlungstemperatur bis zum Ende des Teilprogrammschritts "Reinigen" R die Folge ist. Wie stark der Abfall der Behandlungstemperatur und die Dauer des Abfalls ist, hängt von der Art des durchgeführten Reinigungsprogramms sowie von den Dämmeigenschaften der Geschirrspülmaschine ab.

Gemäß einer weiteren Variante kann auch vorgesehen sein, die Drehzahl des Gebläses der Sorptionstrockenvorrichtung während des Teilprogrammschritts "Reinigen" R zu erhöhen, um eine weitere Verringerung der Zeit bis zum Erreichen der Nenntemperatur Tₙₑₙₙ zu erzielen. Dies könnte für einen Benutzer der Geschirrspülmaschine, z.B. über ein Bedienelement, vorwählbar ausgeführt sein.

Das Trocknen des Spülguts wird bei herkömmlichen Geschirrspülmaschinen durch die so genannte Eigenwärmetrocknung in den Teilprogrammschritten "Klarspülen" und "Trocknen" durchgeführt (Abschnitt 1). Dabei wird die Spülflotte in dem Teilprogrammschritt "Klarspülen" erhitzt, wodurch das heiß klargespülte Spülgut durch die so aufgebaute Eigenwärme des Spülguts während des Trocknungsvorgangs von selbst trocknet. Um diese Eigenwärmetrocknung zu erreichen, wird die Spülflotte deshalb in dem Teilprogrammschritt "Klarspülen" auf die Temperatur T_{K} erwärmt und über Sprüheinrichtungen auf das Spülgut aufgebracht. Durch die relativ hohe Temperatur der Spülflotte in dem Teilprogrammschritt "Klarspülen" von üblicherweise 65°C bis 75°C wird erreicht, dass eine hinreichend große Wärmemenge auf das Spülgut übertragen wird, so dass das am Spülgut anhaftende Wasser durch die im Spülgut gespeicherte Wärme verdampft.

Eine wesentliche Energieeinsparung wird durch Sorptionstrockenvorrichtungen bewirkt, da bei diesen ein Erwärmen der Spülflotte im Teilprogrammschritt "Klarspülen" K grundsätzlich nicht notwendig ist (Abschnitt 2), jedoch in geringem Umfang vorgenommen werden kann (Abschnitt 3). Das Trocknen wird dadurch realisiert, dass in dem Teilprogrammschritt "Trocknen" Luft aus dem Spülbehälter und/oder aus Umgebungsluft durch die Sorptionskolonne in den Spülbehälter geleitet wird, wobei die reversibel dehydrierbares Material enthaltende Sorptionskolonne der Luft während des Durchleitens Feuchtigkeit entzieht. Durch den Einsatz von reversibel dehydrierbarem Material mit hygroskopischer Eigenschaft, z.B. Zeolith, ist eine Erwärmung des zu behandelnden Gutes in dem dem Teilprogrammschritt "Trocknen" vorhergehenden Teilprogrammschritt üblicherweise nicht notwendig (Abschnitt 2), jedoch kann eine Erwärmung auf niedrige Temperaturen, z.B. bis 30°C, beim "Klarspülen" weiterhin vorgenommen werden (Abschnitt 3). Durch die Erwärmung der Luft mittels der Sorptionskolonne, in der die Kondensationswärme des Wasserdampfes frei wird, wird deren Feuchtigkeitsaufnahmekapazität bei jedem Durchlaufen durch die Sorptionskolonne erhöht, was zur Verbesserung des Trocknungsergebnisses und zur Verkürzung der Trocknungszeit führt. Eine zusätzliche Erwärmung der Luft mit einer ergänzenden Heizung im Teilprogrammschritt "Trocknen" über die Erwärmung mit der Sorptionskolonne hinaus und damit z.B. auch des Geschirrs bei Geschirrspülmaschinen ist normalerweise nicht erforderliche, weil die in der Sorptionskolonne freiwerdende Wärmeenergie ausreichend ist, die Luft auf hohe Temperaturen, z.B. 70°C, aufzuwärmen. Die Sorptionskolonne selbst erwärmt sich durch die Kondensationswärme auf Temperaturen von bis zu z.B. 160°C.

Eine Beschleunigung des Trocknungsvorganges, welcher bei herkömmlichen Geschirrspülmaschinen über eine Zeitprogrammsteuerung erfolgt und bis zum Zeitpunkt t₁ andauert, kann durch Vorsehen des stufenlos oder in mehreren Stufen drehzahlgesteuerten Gebläses in der Sorptionstrockenvorrichtung realisiert werden. Durch die Erhöhung der Drehzahl wird der Adsorptionsvorgang beschleunigt, was zu einer Verkürzung der Trocknungszeit führt.

Wird auf eine Erhöhung der Temperatur während des Teilprogrammschritts "Klarspülen" verzichtet, so kann das Trocknen bereits zum Zeitpunkt t₂ (Abschnitt 2) beendet werden. Eine weitere Verkürzung der Trocknungszeit ergibt sich durch die vorstehend vorgenommene Erwärmung der Klarspültemperatur (Abschnitt 3), wodurch die Trocknung zum Zeitpunkt t₃ beendet werden kann. Dabei ist davon auszugehen, dass die Trocknungseffektivität bzw. der Trocknungsgrad des zu trocknenden Spülguts in allen drei Varianten identisch ist.

Da die Erhöhung der Drehzahl des Gebläses der Sorptionstrockenvorrichtung mit einer erhöhten Geräuschabstrahlung einhergeht, ist es vorteilhaft, diese Betriebsweise aktiv durch einen Nutzer der Geschirrspülmaschine vornehmen zu lassen. Dies könnte beispielsweise durch das Vorsehen eines entsprechenden Bedienelements geschehen, welches mit einer Hauptsteuerung der Geschirrspülmaschine in Verbindung steht und eine entsprechende Betriebsweise ermöglicht.

Mit der vorliegenden Erfindung ist ein Verfahren bereitgestellt, mit dem es möglich ist,, eine Geschirrspülmaschine der eingangs genannten Art wirtschaftlich zu betreiben sowie den damit verbundenen Energieaufwand zeitoptimiert gering zu halten.

## Patentansprüche

1. Verfahren zum Betreiben einer Geschirrspülmaschine mit wenigstens einem Teilprogrammabschnitt mit zu erwärmender Spülflotte auf eine Nenntemperatur, z. B. "Reinigen" (R), wobei in diesem Teilprogrammabschnitt von einer Heizung erwärmte Luft zur Desorption eines reversibel dehydrierbaren Materials aus einem Spülbehälter der Geschirrspülmaschine und/oder Umgebungsluft durch eine Sorptionskolonne mit reversibel dehydrierbarem Material in den Spülbehälter zur Erwärmung der Spülflotte und/oder des Spülgutes geleitet wird, **dadurch gekennzeichnet, dass** die Heizung nach dem Erreichen eines desorbierten Zustands des reversibel dehydrierbaren Materials weiter betrieben wird, bis die in dem jeweiligen Teilprogrammabschnitt erforderliche Nenntemperatur der Spülflotte erreicht ist.

2. Verfahren nach Anspruch 1, **dadurch gekennzeichnet, dass** die desorbierte Feuchtigkeit dem Spülbehälter zugeführt wird.

3. Verfahren nach Anspruch 1 oder 2, **dadurch gekennzeichnet, dass** vor und/oder nach dem Erreichen des desorbierten Zustands des reversibel dehydrierbaren Materials eine zusätzliche Heizung zum Erwärmen der Spülflotte betrieben wird.

4. Verfahren nach Anspruch 3, **dadurch gekennzeichnet, dass** die zusätzliche Heizung im Kreislauf der Spülflotte angeordnet ist und die Spülflotte direkt erwärmt.

5. Verfahren nach einem der vorhergehenden Ansprüche, **dadurch gekennzeichnet, dass** die Durchleitung der Luft durch ein mit einer variablen Drehzahl betreibbares Gebläse erfolgt, wobei die Drehzahl des Gebläses entsprechend einer gewünschten Zeitdauer des Teilprogrammschritts festgelegt ist.

6. Geschirrspülmaschine mit einem Spülbehälter und Vorrichtungen zum Spülen von Spülgut mittels Spülflotte sowie mit einer Sorptionstrockenvorrichtung, wobei diese eine mit dem Spülbehälter luftleitend verbundene, reversibel dehydrierbares Material enthaltende Sorptionskolonne aufweist, wobei die Sorptionskolonne einerseits zur Trocknung des Geschirrs und andererseits die zur Desorption der Sorptionskolonne eingesetzte Wärmeenergie zur Erwärmung der im Spülbehälter befindlichen Spülflotte und/oder des Spülguts verwendet wird, **dadurch gekennzeichnet, dass** die Erwärmung der Spüflotte auf die in einem jeweiligen Teilprogrammabschnitt erforderliche Nenntemperatur mittels der Sorptionstrockenvorrichtung ausführbar ist.

7. Geschirrspülmaschine nach Anspruch 6, **dadurch gekennzeichnet, dass** Luft aus dem Spülbehälter und/oder Umgebungsluft während eines Teilprogrammschritts mit zu erwärmender Spülflotte, bevorzugt während des Teilprogrammschritts "Reinigen" (R) und/oder "Vorspülen" (V) und/oder "Klarspülen" (K) durch die Sorptionskolonne und in den Spülbehälter geleitet wird.

8. Geschirrspülmaschine nach Anspruch 6 oder 7, **dadurch gekennzeichnet, dass** der Spülbehälter einen Auslass mit einer Leitung zur Sorptionskolonne aufweist, wobei die Leitung vorzugsweise über ein Absperrventil und in Strömungsrichtung anschließend vorzugsweise über ein Einlassventil zur Umgebungsluft verfügt und der Spülbehälter einen Einlass mit einer Leitung von der Sorptionskolonne aufweist, wobei in der Leitung zu der Sorptiönskolonne ein Gebläse angeordnet ist, das wenigstens einen Teil der Luft im Spülbehälter oder aus der Umgebungsluft der Sorptionskolonne wenigstens zeitweise einführt.

9. Geschirrspülmaschine nach einem der Ansprüche 6 bis 8, **dadurch gekennzeichnet, dass** zur Desorption des reversibel dehydrierbaren Materials und der Erwärmung der Spülflotte und/oder des Spülguts eine elektrische Heizung angeordnet ist.

10. Geschirrspülmaschine nach Anspruch 9, **dadurch gekennzeichnet, dass** die Heizung in dem reversibel dehydrierbaren Material oder in der Leitung zur Sorptionskolonne angeordnet ist.

11. Geschirrspülmaschine nach Anspruch 8, **dadurch gekennzeichnet, dass** das Gebläse der Sorptionstrockenvorrichtung durch eine Hauptsteuereinheit der Geschirrspülmaschine drehzahlsteuerbar ausgebildet ist.

12. Geschirrspülmaschine nach Anspruch 11, **dadurch gekennzeichnet, dass** die Drehzahl des Gebläses stufenlos oder in mehreren Stufen durch ein Bedienelement der Geschirrspülmaschine anwählbar ist.

13. Geschirrspülmaschine nach einem der Ansprüche 6 bis 12, **dadurch gekennzeichnet, dass** ein Verfahren nach einem der Ansprüche 1 bis 5 ausführbar ist.

## Claims

1. Method for operating a dishwasher with at least one part programme section with washing liquor to be heated to a nominal temperature, e.g. "cleaning" (R) wherein, in this part programme section, air heated by a heater for desorption of a reversibly-dehydratable material is conducted from a washing container of the dishwasher and/or surrounding air through a sorption column with reversibly-dehydratable material into the washing container for heating up the washing liquor and/or the items to be washed, **characterised in that** the heater continues to be operated after a desorbed state of the reversibly-dehydratable material has been reached until the nominal temperature of the washing liquor required in the respective programme section is reached.

2. Method according to claim 1, **characterised in that** the desorbed moisture is conveyed to the washing container.

3. Method according to claim 1 or 2, **characterised in that**, before or after the desorbed state of the reversibly-dehydratable material has been reached, an additional heater is operated to heat up the washing liquor.

4. Method according to claim 3, **characterised in that** the additional heater is disposed in the washing liquor circuit and heats up the washing liquor directly.

5. Method according to one of the preceding claims, **characterised in that** the air is conveyed by a fan able to be operated at a variable speed, wherein the speed of the fan is defined in accordance with a desired duration of the part programme section.

6. Dishwasher with a washing container and facilities for washing items to be washed by means of washing liquor and also with a sorption drying device, wherein said device has a sorption column connected for conveyance or air to the washing container containing reversibly-dehydratable material, wherein the sorption column is used on the one hand for drying the dishes and on the other hand the heat energy employed for desorption of the sorption column is used for heating up the washing liquor to be found in the washing container and/or the items to be washed, **characterised in that** the heating up of the washing liquor to the nominal temperature required in a respective programme section is able to be carried out by means of the sorption drying facility.

7. Dishwasher according to claim 6, **characterised in that** air from the washing container and/or surrounding air is conveyed through the sorption column and into the washing container during a part programme section, preferably during the part programme section "cleaning" (R) and/or "pre-rinsing" (V) and/or "final rinsing" (K).

8. Dishwasher according to claim 6 or 7, **characterised in that** the washing container has an outlet with a line to the sorption column, wherein the line preferably has a stop valve and in the flow direction thereafter preferably has an inlet valve for surrounding air and the washing container has an inlet with a line from the sorption column, wherein a fan is disposed in the line to the sorption column, which introduces at least a part of the air in the washing container or from the surrounding air to the sorption column at least at times.

9. Dishwasher according to one of claims 6 to 8, **characterised in that** an electric heater is provided for desorption of the reversibly-dehydratable material and for heating up of the washing liquor and/or the items to be washed.

10. Dishwasher according to claim 9, **characterised in that** the heater is disposed in the reversibly-dehydratable material or in the line to the sorption column.

11. Dishwasher according to claim 8, **characterised in that** the fan of the sorption drying facility is embodied so that its speed can be controlled by a main control unit of the dishwasher.

12. Dishwasher according to claim 11, **characterised in that** the speed of the fan is able to be selected steplessly or in a number of steps by a control element of the dishwasher.

13. Dishwasher according to one of claims 6 to 12, **characterised in that** a method according to one of claims 1 to 5 is able to be executed.

## Revendications

1. Procédé de fonctionnement d'un lave-vaisselle comprenant au moins une étape de programme partiel avec flotte de lavage à échauffer à une température nominale, par ex. « Nettoyage » (R), sachant qu'à cette étape de programme partiel, de l'air échauffé par un dispositif de chauffage pour la désorption d'une matière réversiblement déshydrogénable à partir d'une cuve de lavage du lave-vaisselle et/ou de l'air ambiant est/sont guidé(s) dans la cuve de lavage à travers une colonne de sorption comprenant de la matière réversiblement déshydrogénable pour échauffer la flotte de lavage et/ou les produits à laver, **caractérisé en ce que** le dispositif de chauffage, après l'obtention d'un état désorbé de la matière réversiblement déshydrogénable, continue de fonctionner jusqu'à ce que la température nominale de la flotte de lavage soit atteinte à l'étape respective de programme partiel.

2. Procédé selon la revendication 1, **caractérisé en ce que** l'humidité désorbée est amenée à la cuve de lavage.

3. Procédé selon la revendication 1 ou 2, **caractérisé en ce qu'**avant et/ou après l'obtention de l'état désorbé de la matière réversiblement déshydrogénable, un dispositif de chauffage supplémentaire est mis en fonction pour échauffer la flotte de lavage.

4. Procédé selon la revendication 3, **caractérisé en ce que** le dispositif de chauffage supplémentaire est disposé dans le circuit de la flotte de lavage et **en ce qu'**il échauffe la flotte de lavage directement.

5. Procédé selon l'une quelconque des revendications précédentes, **caractérisé en ce que** le passage de l'air est réalisé au moyen d'un ventilateur pouvant fonctionner avec une vitesse de rotation variable, la vitesse de rotation du ventilateur étant déterminée de manière correspondant à une durée souhaitée de l'étape de programme partiel.

6. Lave-vaisselle comprenant une cuve de lavage et des dispositifs destinés à laver des produits à laver au moyen d'une flotte de lavage et comprenant un dispositif de séchage par sorption, celui-ci présentant une colonne de sorption reliée à la cuve de lavage par passage d'air et contenant de la matière réversiblement déshydrogénable, la colonne de sorption étant utilisée d'une part pour le séchage de la vaisselle et l'énergie calorifique utilisée pour la désorption de la colonne de sorption étant utilisée d'autre part pour l'échauffement de la flotte de lavage et/ou des produits à laver se trouvant dans la cuve de lavage, **caractérisé en ce que** l'échauffement de la flotte de lavage à la température nominale nécessaire à une étape de programme partiel peut être réalisé au moyen du dispositif de séchage par sorption.

7. Lave-vaisselle selon la revendication 6, **caractérisé en ce que** l'air en provenance de la cuve de lavage et/ou l'air ambiant, pendant une étape de programme partiel, est conduit avec la flotte de lavage à échauffer, de préférence pendant l'étape de programme partiel « Nettoyage » (R) et/ou « Prélavage » (V) et/ou « Rinçage » (K), à travers la colonne de sorption et dans la cuve de lavage.

8. Lave-vaisselle selon la revendication 6 ou 7, **caractérisé en ce que** la cuve de lavage présente une sortie munie d'une conduite menant à la colonne de sorption, la conduite disposant de préférence d'une vanne d'arrêt et, ensuite dans le sens d'écoulement, disposant de préférence d'une vanne d'arrivée menant vers l'air ambiant et **en ce que** la cuve de lavage présente une entrée munie d'une conduite en provenance de la colonne de sorption, un ventilateur étant disposé dans la conduite menant vers la colonne de sorption, lequel amène au moins temporairement à la colonne de sorption une partie de l'air se trouvant dans la cuve de lavage ou de l'air ambiant.

9. Lave-vaisselle selon l'une quelconque des revendications 6 à 8, **caractérisé en ce qu'**un dispositif de chauffage électrique est disposé pour la désorption de la matière réversiblement déshydrogénable et pour l'échauffement de la flotte de lavage et/ou des produits à laver.

10. Lave-vaisselle selon la revendication 9, **caractérisé en ce que** le dispositif de chauffage est disposé dans la matière réversiblement déshydrogénable ou dans la conduite menant vers la colonne de sorption.

11. Lave-vaisselle selon la revendication 8, **caractérisé en ce que** le ventilateur du dispositif de séchage par sorption est réalisé par une unité de commande principale du lave-vaisselle à vitesse de rotation pouvant être commandée.

12. Lave-vaisselle selon la revendication 11, **caractérisé en ce que** la vitesse de rotation du ventilateur est sélectionnable de manière continue ou en plusieurs gradins au moyen d'un élément de commande du lave-vaisselle.

13. Lave-vaisselle selon l'une quelconque des revendications 6 à 12, **caractérisé en ce qu'**un procédé selon l'une quelconque des revendications 1 à 5 est exécutable.
